# EUROPEAN PATENT SPECIFICATION

(11) **EP 1 693 911 B1**
(45) Date of publication and mention of the grant of the patent: **21.04.2010**
(21) Application number: 06001848.8
(22) Date of filing: 30.01.2006
(51) Int. Cl.: H01M 4/86, H01M 4/88, H01M 8/10, B01J 27/22, H01M 4/90

(54) **Catalyst structure, process for producing same and fuel cell provided with catalyst**
Katalysatoraufbau, Verfahren zu seiner Herstellung und Brennstoffzelle mit Katalysator
Structure de catalyseur, procédé de sa fabrication et pile à combustible avec catalyseur

(30) Priority: 14.02.2005 JP 2005035370
(43) Date of publication of application: 23.08.2006
(73) Proprietor: Hitachi, Ltd., Tokyo (JP)
(72) Inventor: Iwasaki, Tomio, c/o Hitachi, Ltd. Int.Prop.Group, Tokyo 100-8220 (JP)
(74) Representative: Beetz & Partner

(56) References cited:
- EP-A- 0 730 900
- DE-C1- 3 836 426
- US-A1- 2003 100 446

## Description

### Background of the Invention

The present invention relates to a catalyst structure, a method for producing the catalyst structure, and a fuel cell provided with the catalyst.

Fuel cells have been attracting attention as energy source of the next generation. Recently, fuel cells supplied with a fuel other than hydrogen, which is difficult to handle, have been under development, where methanol has been particularly attracting attention as the fuel. A fuel cell which generates power by direct reaction of methanol on an electrode is referred to as a direct methanol fuel cell (DMFC), and has been studied for applications to various devices, e.g., portable devices. Such a fuel cell is disclosed in, e.g., Japan Society of Applied Physics, Vol. 71, No. 8 (2002), pp. 1005 to 1006. One of the major problems of a DMFC is to improve the cell output. As described in the above-mentioned document (Applied Physics), discussion is made on countermeasures wherein the effective catalyst area is increased by providing irregularities on the surface to improve the catalytic activity.

It is therefore a first object of the present invention to provide a catalyst structure of high catalytic activity. It is a second object to provide a fuel cell of high cell output. It is a third object to provide a catalyst structure stable even at high temperatures.

The above underlying problems are solved according to the independent claims. The dependent claims relate to preferred embodiments of the concept of the present invention.

### Summary of the Invention

As a result of extensive research to solve the above-mentioned problems, the present inventors have found that a catalyst structure provided with nano-size dots (nano-dots) formed in contact with a carrier and catalyst particles formed in contact with the nano-dots, wherein the difference in the lattice constant between the carrier material and the catalyst particle material is rendered 16 % or less, is effective to improve the catalytic activity. It has been also found that this difference is at least 1 %, and more preferably 1 to 11 %.

The term "lattice constant" means the distance between the nearest atoms.

Embodiments of the present invention are, for example, catalysts having the following structures, and fuel cells provided with these catalysts.
(1) A catalyst structure comprising a carrier, nano-dots formed on the carrier and catalyst particles formed on the nano-dots, wherein the difference in the lattice constant between the carrier material and the nano-dot material is 1 to 16 %.
(2) A catalyst structure comprising a carrier, nano-dots located adjacent to the carrier, catalyst particles formed on the nano-dots and a coating material formed in contact with the catalyst particles, wherein the difference in the lattice constant between the carrier material and the nano-dot material is 1 to 16 %.

The present invention provides catalysts of high catalytic activity, and fuel cells of high cell output.

Other objects, features and advantages of the invention will become apparent from the following description of the embodiments of the invention taken in conjunction with the accompanying drawings.

### Brief Description of the Drawings

Fig. 1 schematically shows a catalyst structure of a first embodiment of the present invention.
Fig. 2 illustrates the relationship between the catalyst WC particle/carrier lattice unconformity and the diffusion coefficient ratio.
Fig. 3 illustrates the relationship between the catalyst WC particle/carrier lattice unconformity and the particle size at 20°C in the absence of a coating material.
Fig. 4 illustrates the relationship between the catalyst WC particle/carrier lattice unconformity and the particle size at 200°C in the absence of a coating material.
Fig. 5 illustrates the relationship between the catalyst particle/electroconductive membrane lattice unconformity and the particle size at 200°C in the presence of a coating material composed of carbon nano-horn.
Fig. 6 illustrates the relationship between the catalyst WC particle/carrier lattice unconformity and the particle size at 200°C in the presence of a coating material composed of B-DNA.
Fig. 7 illustrates the relationship between the catalyst WC particle/carrier lattice unconformity and the particle size at 20°C in the presence of a coating material composed of carbon nano-horn.
Fig. 8 illustrates the relationship between the catalyst WC particle/carrier lattice unconformity and the particle size at 20°C in the presence of a coating material composed of B-DNA.
Fig. 9 illustrates the relationship between the catalyst MoC particle/carrier lattice unconformity and the particle size at 20°C in the presence of a coating material composed of B-DNA.
Fig. 10 schematically shows a fuel cell as a second embodiment of the present invention.
Explanation of reference numerals:
1: Carrier, 2: Nano-dot, 3: Catalyst particle, 4: Coating material, 5: Inclusion particle, 101: Electrolyte membrane, 102: Catalyst-carrying electrode (oxygen electrode), 103: Catalyst-carrying electrode (fuel electrode), 104: Interconnection, 105: Interconnection, 106: Load.

### Detailed Description of the Invention

The embodiments of the present invention are described in detail by the examples illustrated in the attached drawings. It is to be understood that the present invention is not limited to the embodiments described herein, and does not exclude modifications made based on a known technique or technique known in the future.

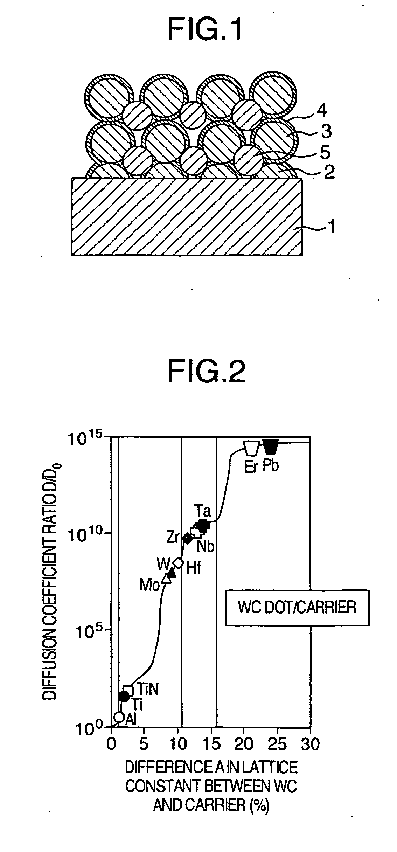

First, Fig. 1 outlines the major parts of a catalyst structure of the first embodiment of the present invention. As illustrated in Fig. 1, the catalyst structure is provided with the carrier 1 which supports the nano-dots 2 coming into contact with the carrier 1, and catalyst particles 3 formed thereon. In Fig. 1, the inclusion particles 5 and the coating material 4 are formed around the catalyst particles 3. As method for forming the nano-dots 2, catalyst particles 3 and inclusion particles 5, there may be employed physical deposition or chemical vapor deposition (CVD), for example. The coating material 4 may be formed by coating, physical deposition or chemical vapor deposition (CVD), for example. As for order of forming these components, after a step (1) for forming the nano-dots 4 to a thickness of 0.4 nm to several tens nm or so, a step (2) for forming the inclusion particles 5 to a thickness of 0.4 nm to several tens nm or so, a step (3) for forming the catalyst particles 3 to a thickness of 0.4 nm to several tens nm or so, and a step (4) for forming the coating material 4 to a thickness of 0.4 nm to several tens nm or so, are carried out in a sequential order of (2), (3), (4), (2), (3), (4) and so on after the step (1). The sequential order may be changed to (4), (2), (3), (4), (2), (3) and so on, or (2), (4), (3), (2), (4), (3) and so on after the step (1). The major component material for the inclusion particles 5 may be the same as that for the carrier 1. The inclusion particles 5 and the coating material 4 may be omitted, when they are unnecessary. The nano-dots 2 and the catalyst particles 3 are mainly composed of WC, MoC or TaC, which are less expensive than a platinum group metal. The catalyst particles composed of WC may be formed by, e.g., bringing gaseous tungsten hexacarbonyl into contact with the heated carrier 1. The catalyst particles composed of WC may be also formed by, e.g., exposing the carrier to W and C vapors.

In the above catalyst structure, the difference in the lattice constant between the material of the carrier 1 and the material of the nano-dots 2 is kept at 16 % or less, but not less than 1 %, and more preferably between 1 to 11 %, because the nano-dots 2 and the catalyst particles 3 can be sufficiently fine (e.g., 10 nm or less) at room temperature (20°C) to increase the total surface area of the catalyst particles 3 and hence to improve the catalytic activity functions, when their lattice constants satisfy the above conditions. When the difference is below 1 %, the nano-dot constituent atoms are arranged in accordance with the atomic arrangement on the carrier 1 surface, with the result that the nano-dots 2 and the catalyst particles 3 are arranged in a film on the carrier 1 surface. It is therefore difficult to increase the total surface area of the catalyst particles 3. When the difference is above 16 %, the carrier 1 and the nano-dots 2 will become unstable because of excessive lattice unconformity, with the result that the nano-dot constituent atoms diffuse actively to agglomerate each other. This increases the size of the nano-dots 2, which is accompanied by an increased size of the catalyst particles 3, and the total surface area of the catalyst particles 3 cannot be increased. When the difference is 16 % or less, the diffusion of the nano-dots 2 can be controlled to keep the nano-dots 2 and the catalyst particles 3 sufficiently fine (e.g., 10 nm or less in size) at room temperature. At the same time, the difference is controlled at 1 % or more. The nano-dots 2 and the catalyst particles 3 share a major component to prevent unstable conditions.

In order to explain the effects of this embodiment in detail, examples of analysis by use of molecular dynamic simulation are described below. As described in Journal of Applied Physics, Vol. 54, 1983, pp. 4877, the molecular dynamic simulation is a method wherein the force acting on each atom through an interatomic potential is calculated, and Newton's equation of motion is solved based thereon to estimate the position of each atom at a given time. In this embodiment, the interaction between different elements is calculated by the above analysis in which charge transfer is taken into consideration to establish the relationship described later.

The major effect of the present invention observed in this embodiment is that the catalyst particles 3 can be sufficiently fine at room temperature by keeping a difference in the lattice constant between the material of the carrier 1 and the material of the catalyst particles 3 of 16 % or less, because of controlled diffusion of the catalyst particles 3, as discussed above. This effect can be demonstrated by calculating the diffusion coefficient of the catalyst particles 3 in the vicinity of the interface with the carrier 1 to analyze its dependence on the lattice unconformity. The application of the molecular dynamic simulation to the calculation of diffusion coefficients is discussed in, e.g., Physical Review B, Vol. 29, 1984, pp. 5367 to 5369.

First, simulation is made for a catalyst structure wherein WC is used as material for the nano-dots 2 and the catalyst particles 3 without using the coating material 4. The results are shown in Fig. 2, wherein the abscissa indicates the relative difference A between the lattice constant of the nano-dots 2 formed and the lattice constant a of the carrier 1, and the ordinate indicates the calculated diffusion coefficient D of the catalyst particles 2 in the interface with the carrier 1. Here, the lattice constant means the distance between the nearest atoms. In Fig. 2, Do denotes the diffusion coefficient of W wherein both the nano-dots 2 and the carrier 1 are composed of WC.

In this embodiment, it is preferable to use WC as one example. However, the above-described nano-dots and catalyst particles may be mainly composed of MoC or TaC, which has a lattice constant similar to that of WC and hence basically similar properties. The following description is made with WC taken as an example for the nano-dots and catalyst particles by referring to the figures, while omitting the description of MoC and TaC.

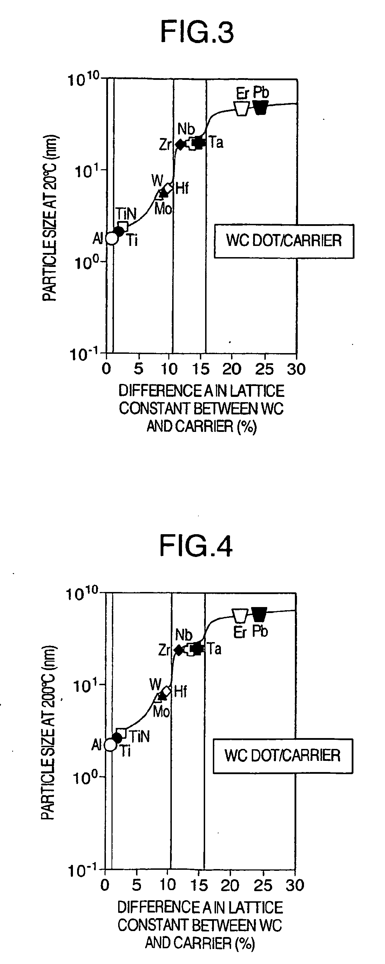

The simulation results shown in Fig. 2 indicate that the nano-dots have a higher diffusion coefficient, and agglomerate more with each other to grow, as they have a larger difference in the lattice constant. As shown, Al, Ti and TiN have a lower diffusion coefficient, and W, Mo, Hf, Er and Pb have a higher diffusion coefficient in an ascending order, Pb having the highest. Fig. 3 shows the simulation results with respect to the particle size. The results are very similar to those shown in Fig. 2, indicating that the particles have a larger size in the high diffusion coefficient region. It is particularly noted that the diffusion coefficient shown in Fig. 2 significantly increases as the lattice constant difference exceeds 16 %.
Therefore, the difference is set to be 16 % or less. It is also found that the particle size shown in Fig. 3 also notably increases at a difference above 16 %. At a difference below 1 %, it is observed that the particles are arranged in a film, although.the particle size is not shown in Fig. 3. Therefore, the difference is 1 % or more. Thus, the difference is 1 % to 16 % in order to increase the total surface area of the catalyst particles. The difference is preferably 11 % or less in order to sufficiently decrease the particle size (e.g., to 5 nm or less) as indicated in Fig. 3.

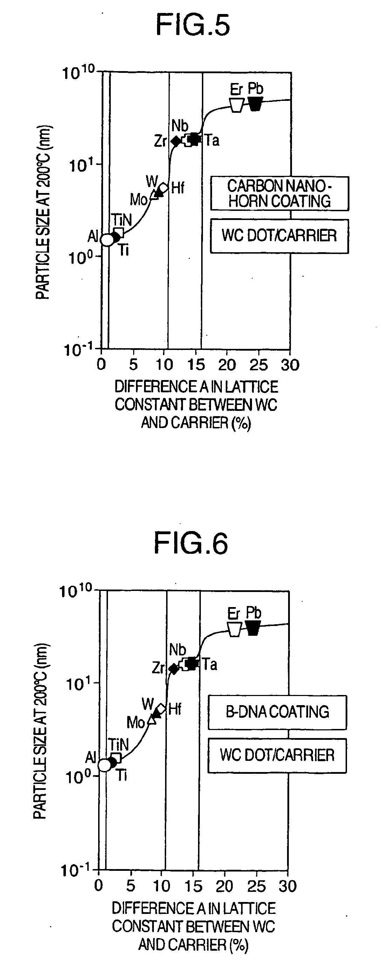

Fig. 4 shows the particle size at 200°C, which is larger at the same lattice constant difference than the catalyst particle size at room temperature shown in Fig. 3. On the other hand, Fig. 5 shows the simulation results at 200°C wherein a coating material composed of carbon nano-horn is used. Comparing the results shown in Fig. 5 with those shown in Fig. 4 which gives the results in the absence of a coating material, the particle size is reduced by about 20 to 30 % in Fig. 5. It is thus considered that the coating material composed of carbon nano-horn works to prevent particle growth at high temperature.

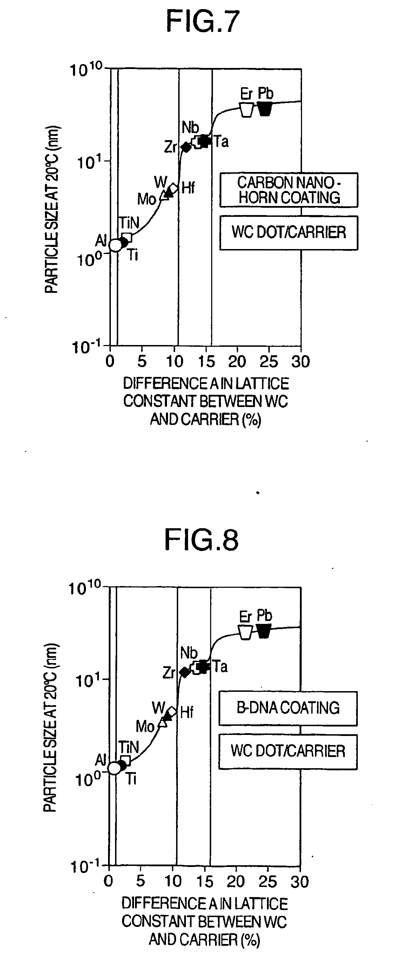

Fig. 6 shows the simulated particle size at 200°C wherein a coating material composed of B-DNA is used. Comparing the results shown in Fig. 6 with those shown in Fig. 5 which gives the results with carbon nano-horn, the size with B-DNA is reduced by about 20 % to 30 % in Fig. 6. It is thus considered that B-DNA works to prevent particle growth more efficiently than carbon nano-horn. Figs. 7 and 8 show the simulation results of the particle size at 20°C, which correspond to those shown in Figs. 5 and 6, respectively. The particle sizes at 20°C are close to those at 200°C shown in Figs. 5 and 6. Thus, it is considered that the coating material composed of carbon nano-horn or B-DNA has an effect of reducing the particle size, irrespective of the temperature.

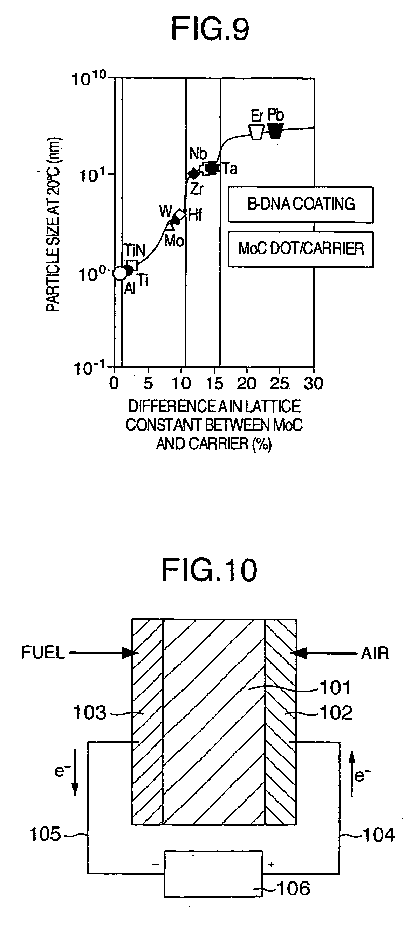

The above embodiment describes the catalyst structure with WC used for the nano-dots and the catalyst particles. However, WC may be replaced by TaC or MoC. It can be demonstrated by simulation that TaC or MoC allow to attain similar effects. For example, Fig. 9 shows the simulation results with MoC used for the nano-dots and catalyst particles and with B-DNA for the coating material, indicating the particle size at 20°C. The results are almost similar to those shown in Fig. 8. Thus, it is found that WC can be replaced by MoC to attain the effect of stably reducing the particle size.

Next, Fig. 10 schematically shows a fuel cell structure as the second embodiment of the present invention. As illustrated, the fuel cell of this embodiment has a structure provided with an electrolyte membrane 101 coated with catalyst-supporting electrodes 102 and 103 on each side, to which a load 106 is connected by the interconnections 104 and 105. Methanol, for example, may be used as the fuel. The electrode 102 works as an oxygen electrode and the electrode 103 as a fuel electrode. The catalyst for the oxygen electrode 102 is preferably composed of catalyst particles which promote the reduction of oxygen, e.g., Pd or a Pd alloy. The fuel electrode 103 preferably has a catalyst structure, e.g., that described in the first embodiment. For example, the catalyst particles and nano-dots for the fuel electrode 103 are composed of WC or MoC particles supported by the electrode. As a major component for a carrier of the electrode, there is preferably used one material selected from the group consisting of A1, Ti, TiN, W, Mo and Hf. Particularly preferably, the carrier of the electrode contains at least one material selected from the group consisting of A1, Ti and TiN. Such a combination can effectively reduce the lattice constant difference and make the particles sufficiently fine. The fuel cell of this embodiment has a high cell output by virtue of the improved catalytic activity functions produced by the effect described in the first embodiment. Moreover, Al, Ti, TiN, W, Mo or Hf used as the major component element for the carrier have the advantage of being stably connected to a proton-conducting polymer used for the electrolyte membrane 101.

As described above, the present invention provides catalysts useful for fuel cells and the like.

It should be further understood by those skilled in the art that although the foregoing description has been made on embodiments of the invention, the invention is not limited thereto, and various changes and modifications may be made without departing from the scope of the appended claims.

## Claims

1. Catalyst structure, comprising
- a carrier (1),
- intermediate particles (2)
and
- catalyst particles (3) formed on the intermediate particles (2),
**characterized in that**
- the carrier (1) comprises Al, Ti, TiN, W, Mo or Hf as the major component,
- the intermediate particles (2) are nano-dots formed on the carrier (1),
- the nano dots (2) comprise WC, MoC or TaC as the major component,
- the difference in the distance between the nearest atoms of the material of the carrier (1) and the distance between the nearest atoms of the material of the nano-dots (2) is 1 to 16 %,
and
- the catalyst particles (3)
• are formed on the nano-dots (2),
• comprise WC, MoC or TaC as the major component, and
• share the major component with the nano-dots (2).

2. Catalyst structure according to claim 1, wherein the difference in the distance between the nearest atoms of the material of the carrier (1) and the distance between the nearest atoms of the material of the nano-dots (2) is 1 to 11 %.

3. Catalyst structure according to claim 1 or 2, wherein the nano-dots (2) are located adjacent to the carrier (1), and a coating material (4) is formed in contact with the catalyst particles (3).

4. Catalyst structure according to any of claims 1 to 3, wherein the nano-dots (2) and the catalyst particles (3) have a size of 2.6 to 4.2 nm.

5. Catalyst structure according to any of claims 1 to 4, wherein the coating material (4) comprises DNA as the major component.

6. Catalyst structure according to claim 5, wherein the coating material (4) comprises B-DNA as the major component.

7. Catalyst structure according to any of claims 1 to 4, wherein the coating material (4) comprises carbon nano-horn as the major component.

8. Method for producing a catalyst structure, preferably that of claims 1 to 7, comprising the following steps:
- preparing or providing a carrier (1) comprising Al, Ti, TiN, W, Mo or Hf as the major component,
- forming nano-dots (2) comprising WC, MoC or TaC as the major component on the carrier (1) by physical deposition or chemical vapor deposition (CVD), wherein the difference in the distance between the nearest atoms of the material of the carrier (1) and the distance between the nearest atoms of the material of the nano-dots (2) is 1 to 16 %
and
- forming catalyst particles (3) comprising WC, MoC or TaC as the major component on the nano-dots (2), the catalyst particles sharing the major component with the nano-dots (2).

9. Method according to claim 8, wherein a coating (4) is formed being in contact with the catalyst particles (3).

10. Method according to claim 9, wherein DNA, preferably B-DNA, or carbon nano-horn is applied as coating (4).

11. Fuel cell, comprising a fuel electrode (103), an oxygen electrode (102) and an electrolyte membrane (101) placed between the fuel electrode (103) and the oxygen electrode (102), wherein the oxygen electrode (102) contains a catalyst structure according to any of claims 1 to 7.

12. Fuel cell, comprising a fuel electrode (103), an oxygen electrode (102) and an electrolyte membrane (101) placed between the fuel electrode (103) and the oxygen electrode (102), wherein the fuel electrode (103) contains a catalyst structure according to any of claims 1 to 7.

13. Fuel cell according to claim 12, wherein the oxygen electrode (102) is composed of catalyst particles promoting the reduction of oxygen, preferably Pd or a Pd alloy.

14. Fuel cell according to any of claims 11 to 13, wherein the fuel electrode (103) is supplied with a fuel containing an alcohol or consisting of an alcohol.

15. Fuel cell according to any of claims 11 to 14, wherein the fuel consists of or comprises methanol and/ or ethanol.

16. Use of the catalyst structures according to any of claims 1 to 7 in fuel cells comprising a fuel electrode (103), an oxygen electrode (102) and an electrolyte membrane (101) placed between the fuel electrode (103) and the oxygen electrode (102).

## Patentansprüche

1. Katalysatoraufbau, der umfasst:
- einen Träger (1),
- Zwischenpartikel (2)
und
- Katalysatorpartikel (3), die auf den Zwischenpartikeln (2) ausgebildet sind,
**dadurch gekennzeichnet, dass**
- der Träger (1) Al, Ti, TiN, W, Mo oder Hf als Hauptbestandteil enthält,
- die Zwischenpartikel (2) Nano-Dots sind, die auf dem Träger (1) ausgebildet sind,
- die Nano-Dots (2) WC, MoC oder TaC als Hauptbestandteil aufweisen,
- der Unterschied zwischen dem Abstand zwischen den nächsten Atomen des Materials des Trägers und dem Abstand zwischen den nächsten Atomen des Materials der Nano-Dots (2) 1 bis 16 % beträgt
und
- die Katalysatorpartikel (3)
• auf den Nano-Dots (2) ausgebildet sind,
• WC, MoC oder TaC als Hauptbestandteil aufweisen
und
• den gleichen Hauptbestandteil wie die Nano-Dots (2) aufweisen.

2. Katalysatoraufbau nach Anspruch 1, bei dem der Unterschied zwischen dem Abstand zwischen den nächsten Atomen des Materials des Trägers (1) und dem Abstand zwischen den nächsten Atomen des Materials der Nano-Dots (2) 1 bis 11 % beträgt.

3. Katalysatoraufbau nach Anspruch 1 oder 2, bei dem die Nano-Dots (2) an den Träger (1) angrenzend angeordnet sind und ein Beschichtungsmaterial (4) in Kontakt mit den Katalysatorpartikeln (3) ausgebildet ist.

4. Katalysatoraufbau nach einem oder mehreren der Ansprüche 1 bis 3, bei dem die Nano-Dots (2) und die Katalysatorpartikel (3) eine Größe von 2,6 bis 4,2 nm aufweisen.

5. Katalysatoraufbau nach einem oder mehreren der Ansprüche 1 bis 4, bei dem das Beschichtungsmaterial (4) DNA als Hauptbestandteil aufweist.

6. Katalysatoraufbau nach Anspruch 5, bei dem das Beschichtungsmaterial (4) B-DNA als Hauptbestandteil aufweist.

7. Katalysatoraufbau nach einem oder mehreren der Ansprüche 1 bis 4, bei dem das Beschichtungsmaterial (4) Kohlenstoff-Nanohorn als Hauptbestandteil aufweist.

8. Verfahren zur Herstellung eines Katalysatoraufbaus, vorzugsweise des Katalysatoraufbaus der Ansprüche 1 bis 7, das folgende Schritt umfasst:
- Herstellen oder Vorsehen eines Trägers (1), der Al, Ti, TiN, W, Mo oder Hf als Hauptbestandteil aufweist,
- Ausbilden von Nano-Dots (2), die WC, MoC oder TaC als Hauptbestandteil aufweisen, auf dem Träger (1) durch physikalische Abscheidung oder chemische Abscheidung aus der Gasphase (CVD),
wobei der Unterschied zwischen dem Abstand zwischen den nächsten Atomen des Materials des Trägers (1) und dem Abstand zwischen den nächsten Atomen des Materials der Nano-Dots (1) 1 bis 16 % beträgt,
und
- Ausbildung von Katalysatorpartikeln (3), die WC, MoC oder TaC als Hauptbestandteil aufweisen, auf den Nano-Dots (2), wobei die Katalysatorpartikel den gleichen Hauptbestandteil aufweisen wie die Nano-Dots (2).

9. Verfahren nach Anspruch 8, bei dem eine Beschichtung (4) erzeugt wird, die in Kontakt mit den Katalysatorpartikeln (3) steht.

10. Verfahren nach Anspruch 9, bei dem DNA, vorzugsweise B-DNA, oder Kohlenstoff-Nanohorn als Beschichtung (4) aufgebracht wird.

11. Brennstoffzelle, die eine Brennstoffelektrode (103), eine Sauerstoffelektrode (102) und eine Elektrolytmembran (101) aufweist, die zwischen der Brennstoffelektrode (103) und der Sauerstoffelektrode (102) angeordnet ist, wobei die Sauerstoffelektrode (102) einen Katalysatoraufbau nach einem der Ansprüche 1 bis 7 enthält.

12. Brennstoffzelle, die eine Brennstoffelektrode (103), eine Sauerstoffelektrode (102) und eine Elektrolytmembran (101) aufweist, die zwischen der Brennstoffelektrode (103) und der Sauerstoffelektrode (102) angeordnet ist, wobei die Brennstoffelektrode (103) einen Katalysatoraufbau nach einem der Ansprüche 1 bis 7 enthält.

13. Brennstoffzelle nach Anspruch 12, bei der die Sauerstoffelektrode (102) aus Katalysatorpartikeln aufgebaut ist, welche die Reduktion von Sauerstoff fördern, vorzugsweise aus Pd oder einer Pd-Legierung.

14. Brennstoffzelle nach einem oder mehreren der Ansprüche 11 bis 13, bei der die Brennstoffelektrode (103) mit einem Brennstoff versorgt wird, der einen Alkohol enthält oder aus einem Alkohol besteht.

15. Brennstoffzelle nach einem oder mehreren der Ansprüche 11 bis 14, bei welcher der Brennstoff aus Methanol und/oder Ethanol besteht oder Methanol und/oder Ethanol enthält.

16. Verwendung des Katalysatoraufbaus nach einem oder mehreren der Ansprüche 1 bis 7 in Brennstoffzellen, die eine Brennstoffelektrode (103), eine Sauerstoffelektrode (102) und eine Elektrolytmembran (101) aufweisen, die zwischen der Brennstoffelektrode (103) und der Sauerstoffelektrode (102) angeordnet ist.

## Revendications

1. Structure de catalyseur comprenant
- un support (1),
- des particules intermédiaires (2)
et
- des particules de catalyseur (3) formées sur les particules intermédiaires (2),
**caractérisée en ce que**
- le support (1) comprend Al, Ti, TiN, W, Mo ou Hf comme composant majeur,
- les particules intermédiaires (2) sont des nanopoints formés sur le support (1),
- les nanopoints (2) comprennent WC, MoC ou TaC comme composant majeur,
- la différence entre la distance séparant les atomes de la matière du support (1) les plus proches et la distance séparant les atomes de la matière des nanopoints (2) les plus proches est de 1 à 16 %,
et
- les particules de catalyseur (3)
■ sont formées sur les nanopoints (2),
■ comprennent WC, MoC ou TaC comme composant majeur, et
■ partagent le composant majeur avec les nanopoints (2).

2. Structure de catalyseur selon la revendication 1, dans laquelle la différence entre la distance séparant les atomes de la matière du support (1) les plus proches et la distance séparant les atomes de la matière des nanopoints (2) les plus proches est de 1 à 11 %.

3. Structure de catalyseur selon la revendication 1 ou 2, dans lequel les nanopoints (2) sont situés sur un plan adjacent au support (1) et un matériau de revêtement (4) est formé en contact avec les particules de catalyseur (3).

4. Structure de catalyseur selon l'une quelconque des revendications 1 à 3, dans laquelle les nanopoints (2) et les particules de catalyseur (3) ont une taille de 2.6 à 4.2 nm.

5. Structure de catalyseur selon l'une quelconque des revendications 1 à 4, dans laquelle le matériau de revêtement (4) comprend de l'ADN comme composant majeur.

6. Structure de catalyseur selon la revendication 5, dans laquelle le matériau de revêtement (4) comprend de l'ADN-B comme composant majeur.

7. Structure de catalyseur selon l'une quelconque des revendications 1 à 4, dans laquelle le matériau de revêtement (4) comprend de la nanocorne de carbone comme composant majeur.

8. Procédé de production d'une structure de catalyseur, de préférence selon les revendications 1 à 7, comprenant les étapes consistant à :
- préparer ou fournir un support (1) comprenant Al, Ti, TiN, W, Mo ou Hf comme composant majeur,
- former des nanopoints (2) comprenant WC, MoC ou TaC comme composant majeur sur le support (1) par dépôt physique ou dépôt chimique en phase vapeur (CVD),
dans lequel la différence entre la distance séparant les atomes de la matière du support (1) les plus proches et la distance séparant les atomes de la matière des nanopoints (2) les plus proches est de 1 à 16 %
et
- former des particules de catalyseur (3) comprenant WC, MoC ou TaC comme composant majeur sur les nanopoints (2), les particules de catalyseur partageant le composant majeur avec les nanopoints (2).

9. Procédé selon la revendication 8, dans lequel un revêtement (4) est formé en étant en contact avec les particules de catalyseur (3).

10. Procédé selon la revendication 9, dans lequel l'ADN, de préférence l'ADN-B, ou la nanocorne de carbone est appliqué(e) sous la forme d'un revêtement (4).

11. Pile à combustible, comprenant une électrode à combustible (103), une électrode à oxygène (102) et une membrane à électrolyte (101) placée entre l'électrode à combustible (103) et l'électrode à oxygène (102), dans laquelle l'électrode à oxygène (102) contient une structure de catalyseur selon l'une quelconque des revendications 1 à 7.

12. Pile à combustible, comprenant une électrode à combustible (103), une électrode à oxygène (102) et une membrane à électrolyte (101) placée entre l'électrode à combustible (103) et l'électrode à oxygène (102), dans laquelle l'électrode à combustible (103) contient une structure de catalyseur selon l'une quelconque des revendications 1 à 7.

13. Pile à combustible selon la revendication 12, dans laquelle l'électrode à oxygène (102) est constituée de particules de catalyseur favorisant la réduction de l'oxygène, de préférence Pd ou un alliage de Pd.

14. Pile à combustible selon l'une quelconque des revendications 11 à 13, dans laquelle l'électrode à combustible (103) est alimentée avec un combustible contenant un alcool ou étant constitué d'un alcool.

15. Pile à combustible selon l'une quelconque des revendications 11 à 14, dans laquelle le combustible se compose ou comprend du méthanol et/ou de l'éthanol.

16. Utilisation des structures de catalyseur selon l'une quelconque des revendications 1 à 7 dans des piles à combustible comprenant une électrode à combustible (103), une électrode à oxygène (102) et une membrane à électrolyte (101) placée entre l'électrode à combustible (103) et l'électrode à oxygène (102).
